# EUROPÄISCHE PATENTANMELDUNG

(11) **EP 1 004 796 A2**
(43) Veröffentlichungstag der Anmeldung: **31.05.2000**
(21) Anmeldenummer: 99123388.3
(22) Anmeldetag: 24.11.1999
(51) Int. Cl.: F16H 7/02

(54) **Selbstführender Zahnriementrieb**

(30) Priorität: 27.11.1998 DE 19854850
(71) Anmelder: ContiTech Antriebssysteme GmbH, 30165 Hannover (DE)
(72) Erfinder: Bonkowski, Manfred, 30900 Wedemark (DE); Beck, Josef, 31139 Hildesheim (DE)
(74) Vertreter: Schneider, Egon

(57) **Zusammenfassung**

Bei einem aus Zahnriemen (12) und Zahnscheibe (4) bestehenden Zahnriementrieb (2) soll ein polygonfreies Laufverhalten erzielt werden. Die Zahnscheibe (4) ist in ihren Randbereichen (10a,10b) zylindrisch gestaltet und die Laufseite des Zahnriemens (12) ist an beiden zu den Randbereichen (10a,10b) der Zahnscheibe (4) korrespondierenden Randzonen mit einem ungezahnten glatten Laufstreifen (16a,16b) versehen. Dabei ragen die zylindrischen Bereiche (10a,10b) und die glatten Laufstreifen (16a,16b) in ihre Höhe (20a,20b) über die Höhe (22) der Verzahnung so weit hinaus, daß beim Betrieb des Riementriebs (2) zwischen Zahnscheibe (4) und Riemen (12) im Bereich der Verzahnung nur an den Zahnflanken Kontakt zwischen Riemen (12) und Scheibe (4) auftritt, aber ein Kontakt zwischen Riemen-Zahngrund (24) und Scheiben-Zahnkopf (26) bzw. zwischen Riemen-Zahnkopf (28) und Scheiben-Zahngrund (30) vermieden wird.

## Beschreibung

Grundlage der vorliegenden Erfindung ist ein aus Zahnriemen und Zahnscheibe bestehender selbstführender Zahnriementrieb mit den im Oberbegriff des Anspruchs 1 genannten Merkmalen.

Ein bei Zahnriementrieben nach wie vor nicht befriedigend gelöstes Problem besteht in der Geräuschentwicklung, verursacht insbesondere durch den sogenannten Polygoneffekt. Unter Polygoneffekt versteht man die periodische Unterbrechung der Riemenauflage im tangentialen Berührungspunkt von Scheibe und Riemen. Wegen der Unterbrechungen der Berührung Zahnriemen/Zahnscheibe ergibt sich eine periodische Radialschwingung des Riemens während des Abrollvorganges. Zusätzlich gibt es ein Aufschlaggeräusch, das beim Auftreffen flächiger Riemenzonen auf die Scheibe entsteht. Darüberhinaus entstehen Anlaufgeräusche beim Auftreffen des Riemens auf Bordscheiben.

Mit Hilfe von bogenverzahnten Riemen, die mit entsprechenden bogenverzahnten Scheiben in Eingriff stehen, kann auf Bordscheiben verzichtet werden. Damit werden die durch die Verwendung von Bordscheiben bekannten Nachteile vermieden. Auch erfolgt bei Bogenverzahnung die periodische Berührung und Unterbrechung zwischen Riemen und Scheibe nicht abrupt sondern gleitend. Eine harte Kontaktnahme nebst einer damit verbundenen Geräuschentwicklung läßt sich aber auch bei Bogenverzahnung nicht völlig vermeiden.

Gemäß der US-Patentschrift 2,770,977 erfolgt die Längsführung eines Riemens mit Hilfe mindestens einer Längsrippe, die einer in der Scheibe befindlichen Längsnut zugeordnet ist. Die Längsrippe kann mit in regelmäßigen Abständen versehenen Quernuten versehen sein, was nicht obligatorisch ist. über die Geräuschentwicklung beim Betrieb derartiger Riemen hat man sich seinerzeit keine Gedanken gemacht.
Die EP 0 389 741 A2 beschreibt ebenfalls einen Zahnriemen mit einer mittig angeordneten Führungsrippe oder mit zwei seitlichen Führungsrippen. Diese mindestens eine Führungsrippe, die Quernuten aufweist, korrespondiert zu mindestens einer in der Zahnscheibe befindlichen Längsnut. Um die Polygonwirkung zu bekämpfen, ist in der Längsnut ein Weichgummiring vorgesehen. Auf diese Weise laufen zwar die auf der Führungsrippe durch die Quernuten gebildeten Klötze sanfter auf der Scheibe ab, die durch das Abrollen des sonstigen Zahnriemens auf der Riemenscheibe gegebene Polygoneffekt ist aber nach wie vor vorhanden, da eine Kontaktnahme zwischen Zahnkopf der Scheibe und Zahngrund des Riemens (bzw. umgekehrt) durch den in der Führungsrinne angeordneten Weichgummiring nicht verhindert wird.

Die Aufgabe der vorliegenden Erfindung, wie sie mit Anspruch 1 im wesentlichen gelöst ist, besteht in der Schaffung eines Zahnriementriebs mit polygonfreiem Laufverhalten.

Mit Hilfe des erfindungsgemäßen Zahnriementriebes ist eine formschlüssige Kraftübertragung, z. B. für Nockenwellen-Steuertriebe von Verbrennungsmotoren, bei gleichzeitiger Vermeidung des bisher üblichen negativen Polygoneffektes gegeben.

Wie bei den in den Schriften US 2,770,977 und EP 0 389 741 A2 genannten Zahnriementrieben dienen die seitlichen, auf dem Riemen befindlichen Längsrippen der seitlichen Führung des Riemens auf der Scheibe, d. h. die Längsrippen stellen einen Schutz des Riemens vor dem Abrutschen von der Zahnriemenscheibe dar.

Der wesentliche Gedanke der Erfindung ist darin zu sehen, daß durch seitlich umlaufende Längsstreifen ein Kontakt zwischen Zahnkopf der Scheibe und Zahngrund des Riemens, bzw. umgekehrt, vermieden wird.

Zu diesem Zweck werden die radial umlaufenden Laufstreifen so ausgeführt, daß zwischen Zahnscheibe und Riemen im Bereich der Verzahnung nur an der jeweiligen in Eingriff stehenden Zahnflanke Kontakt zur Scheibe entsteht, während die radiale Abstützung des Riemens ausschließlich über dessen umlaufende Laufstreifen erfolgt (d. h., kein Kontakt an Zahnkopf bzw. Zahngrund besteht.) Deshalb ragt der Laufstreifen etwas über die eigentliche Zahnung hinaus und die Höhe der Zähne an der Scheibe ist ebenfalls so ausgeführt, daß kein Aufsetzen im Zahngrund des Riemens erfolgen kann.

Dadurch kann bei formschlüssiger Kraftübertragung durch ein beliebiges Zahnprofil ein polygonfreier Lauf über die Zahnscheiben, die in ihren Randbereichen zylindrisch gestaltet sind, realisiert werden.

Bei größeren Riemenbreiten kann in der Riemenmitte ein weiterer Laufstreifen zur zusätzlichen Abstützung vorgesehen werden.

Im Bereich der Laufstreifen kann die Riemenscheibe vorzugsweise leicht konisch gestaltet sein, wodurch automatisch eine axiale Zentrierung erzielt wird.

Mit Hilfe der erfindungsgemäßen Ausbildung des Zahnriementriebes werden Schwingungsanregungen durch den Polygoneffekt vermieden, woraus ein geräuscharmer Lauf resultiert. Aufgrund einer besseren Stabilisierung durch die beidseitige Verbindung der Einzelzähne über die Laufstreifen ergibt sich außerdem eine längere Riemenlebensdauer.

Eine alternative Ausführungsform sieht einen inversen Aufbau Riemen/Riemenscheibe, d. h. die geometrische Umkehrung, vor. Dabei wird der seitliche Laufstreifen der Zahnriemenscheibe zugeordnet, während der Riemen zylindrisch umlaufende Randstreifen besitzt. Die Auslegung der zylindrisch umlaufenden Randstreifen erfolgt so, daß im Zahnkopf/Zahngrundbereich kein radialer Kontakt zwischen Riemen und Scheibe besteht, so daß die radiale Abstützung des Riemens (wie bei einem Flachriemen) polygonfrei erfolgt. Die Synchronisation und Momentenübertragung erfolgt über die Flanken der Zahnung in der Riemenmitte.

Der erfindungsgemäße Zahnriementrieb ist prinzipiell für alle Synchronantriebe (z. B. Nockenwellen-Steuertriebe, Werkzeugmaschinen) einsetzbar.

Der erfindungsgemäße Riementrieb wird anhand der beigefügten Zeichnungen erläutert. Es zeigt:
Fig. 1 eine Riemen/Scheiben-Anordnung, ausschnittsweise, im Querschnitt;
Fig. 2 eine weitere Riemen/Scheiben-Anordnung, ebenfalls ausschnittsweise und im Querschnitt;
Fig. 3a eine Draufsicht auf die Lauffläche eines erfindungsgemäßen Riemens;
Fig. 3b den Schnitt B-B gemäß Fig. 3a;
Fig. 4a den Querschnitt eines Riemens gemäß Fig 1;
Fig. 4b den Schnitt A-A gemäß Fig. 4a;
Fig. 5 eine Abwandlung der Riemen/Scheiben-Anordnung gemäß Fig. 1, ebenfalls ausschnittsweise im Querschnitt und
Fig. 6 den Querschnitt eines Riemens gemäß Fig. 5.

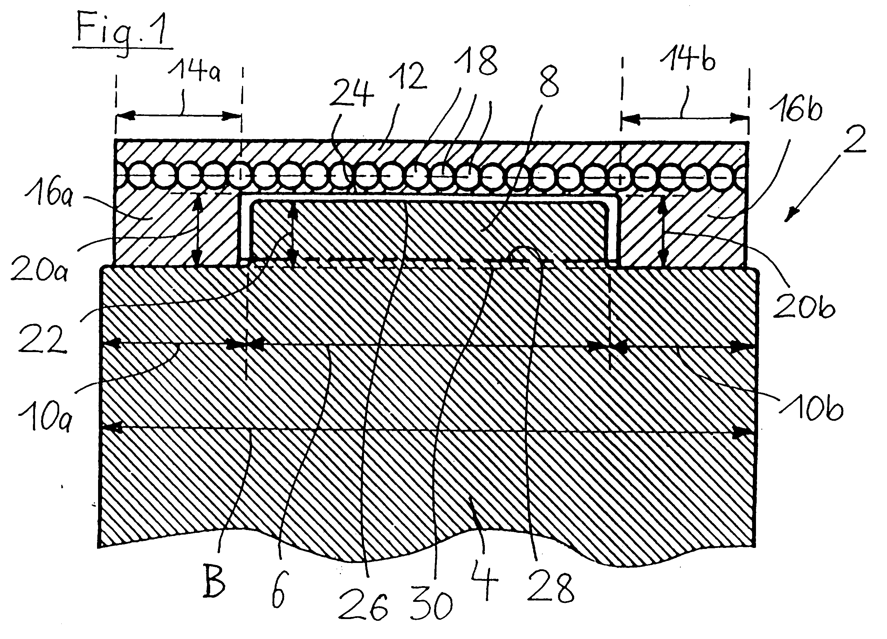

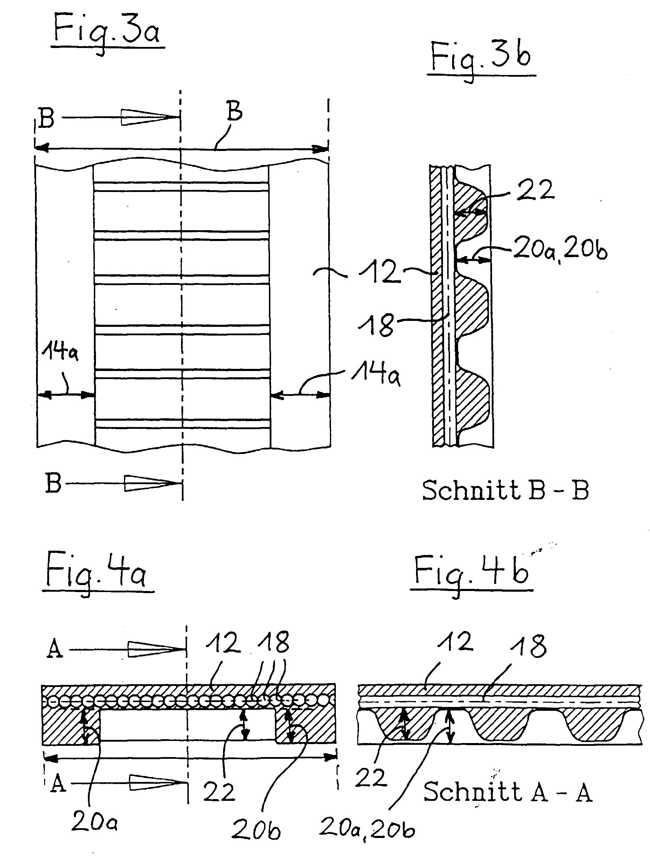

Die in Fig. 1 dargestellte Anordnung 2 zeigt ausschnittsweise den Schnitt durch eine erfindungsgemäße Riemenscheibe (Zahnscheibe) 4. Diese Riemenscheibe 4 weist in ihrem mittleren Bereich 6 einen Zahnkranz 8 auf, während die Randbereiche 10a, 10b zylindrisch gestaltet sind. Diese Riemenscheibe (Zahnscheibe) 4 steht mit einem Zahnriemen 12 in Eingriff. Die unten dargestellte Laufseite des Zahnriemens 12 ist an beiden zu den Randbereichen 10a, 10b der Zahnscheibe 4 korrespondierenden Randzonen 14a, 14b mit einem ungezahnten (glatten) Laufstreifen 16a, 16b versehen.

Zur Erhöhung der Zugfestigkeit weist der Riemen 12 eine Verstärkungseinlage 18 aus Cord oder Gewebe auf. Die zylindrischen Bereiche 10a, 10b der Zahnscheibe 4 und die glatten Laufstreifen 16a, 16b des Zahnriemens 12 sind derartig ausgestaltet, daß die Laufstreifen 16a, 16b des Riemens 12 in ihrer Höhe 20a, 20b über die Höhe 22 der Verzahnung so weit hinausragen, daß ein Abstand zwischen Zahnkopf 26 der Scheibe 4 und dem zugeordneten Zahngrund 24 des Riemens 12 (bzw. umgekehrt: Zahngrund 30 der Scheibe 4 und Zahnkopf 28 des Riemens 12) besteht.

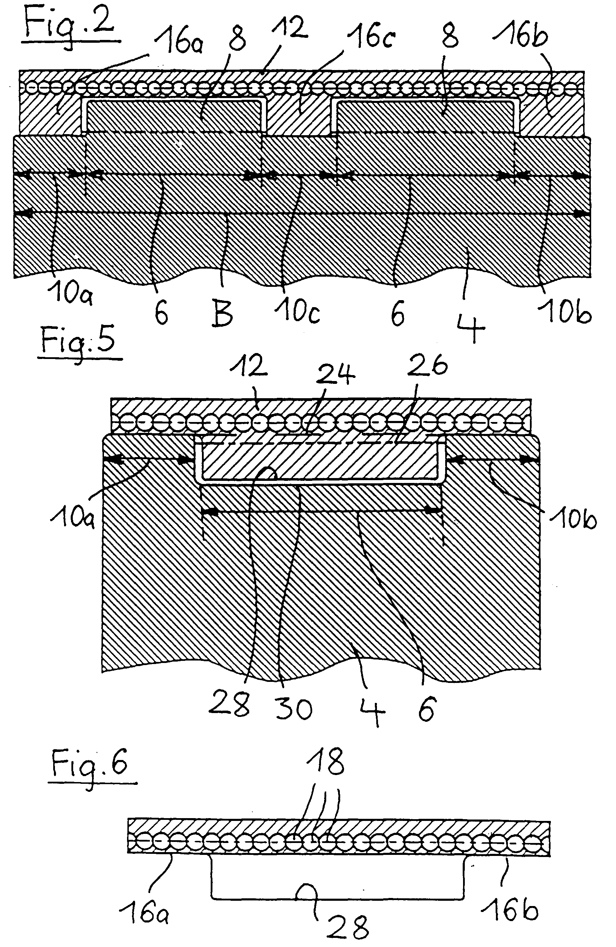

Die in Fig. 2 dargestellte Anordnung unterscheidet sich von der in Fig. 1 dargestellten nicht nur in der größeren Breite B der Riemen/Scheiben-Anordnung. Zur zusätzlichen Abstützung weist der Riemen 12 in seiner Mitte einen weiteren Laufetreifen 16c auf. Dieser Laufstreifen 16c korrespondiert zu einer mittigen Zylinderfläche 10c der Scheibe 4.

Die Fig. 5 und 6 stellen gewissermaßen die geometrische Umkehrung der in Fig. 1 und Fig. 4a dargestellte Ausführungsform dar. Hier ragen die zylindrischen Bereiche 10a, 10b der Scheibe 4 so weit über den Bereich der Verzahnung 6 hinaus, daß beim Betrieb des Riementriebe 2 zwischen Zahnscheibe 4 und Riemen 12 ebenfalls im Bereich der Verzahnung 6 nur an den Zahnflanken Kontakt zwischen Riemen 12 und Scheibe 4 auftritt, aber ein Kontakt zwischen Riemen-Zahngrund 24 und Scheiben-Zahnkopf 26 bzw. zwischen Riemen-Zahnkopf 28 und Scheiben-Zahngrund 30 vermieden wird.

### Bezugszeichenliste

- 2: Antriebsanordnung, Zahnriementrieb
- 4: Riemenscheibe, Zahnscheibe
- 6: mittlerer Bereich der Riemenscheibe, Verzahnungsbereich
- 8: Zahnkranz
- 10a, 10b: Randbereiche der Riemenscheibe
- 10c: mittige Zylinderfläche der Scheibe
- 12: Zahnriemen, Riemen
- 14a, 14b: Randzonen des Zahnriemens
- 16a, 16b: Laufstreifen des Zahnriemens
- 16c: weiterer Laufstreifen
- 18: Verstärkungseinlage
- 20a, 20b: Höhe des Laufstreifens 16a, 16b
- 22: Höhe der Verzahnung
- B: Breite der Riemen/Scheiben-Anordnung
- 24: Riemen-Zahngrund
- 26: Scheiben-Zahnkopf
- 28: Riemen-Zahnkopf
- 30: Scheiben-Zahngrund

## Patentansprüche

1. Aus einem Zahnriemen (12) und einer Zahnscheibe (4) bestehender selbstführender Zahnriementrieb (2),
**dadurch gekennzeichnet,**
daß die Zahnscheibe (4) in ihren Randbereichen (10a, 10b) zylindrisch gestaltet ist, und
daß die Laufseite des Zahnriemens (12) an beiden zu den Randbereichen (10a, l0b) der Zahnscheibe (4) korrespondierenden Randzonen (14a, 14b) mit einem ungezahnten (glatten) Laufstreifen (16a, 16b) versehen ist.

2. Zahnriementrieb nach Anspruch 1,
**dadurch gekennzeichnet,**
daß auf der Zahnscheibe (4) mindestens ein weiterer Bereich (10c) zylindrisch gestaltet ist, und
daß die Laufseite des zugeordneten Zahnriemens (12) mit mindestens einem zu dem mindestens einen weiteren Bereich (10c) der Zahnscheibe (4) korrespondierenden weiteren ungezahnten (glatten) Laufetreifen (16c) versehen ist.

3. Zahnriementrieb nach Anspruch 1 oder 2,
**dadurch gekennzeichnet,**
daß die zylindrischen Bereiche (10a, 10b) der Zahnscheibe (4) und die glatten Laufetreifen (16a, 16b) des Zahnriemens (12) derartig ausgestaltet sind, daß die Laufstreifen (16a, 16b) des Riemens (12) in ihrer Höhe (20a, 20b) über die Höhe (22) der Verzahnung so weit hinausragen, daß beim Betrieb des Riementriebe (2) zwischen Zahnscheibe (4) und Riemen (12) im Bereich der Verzahnung nur an den Zahnflanken Kontakt zwischen Riemen (12) und Scheibe (4) auftritt, aber ein Kontakt zwischen Riemen-Zahngrund (24) und Scheiben-Zahnkopf (26) bzw. zwischen Riemen-Zahnkopf (28) und Scheiben-Zahngrund (30) vermieden wird.

4. Zahnriementrieb nach Anspruch 1 oder 2,
**dadurch gekennzeichnet,**
daß die zylindrischen Bereiche (10a, 10b) der Zahnscheibe (4) und die glatten Laufetreifen (16a, 16b) des Zahnriemens (12) derartig ausgestaltet sind, daß die zylindrischen Bereiche (10a, 10b) der Scheibe (4) so hoch über den Bereich der Verzahnung hinausragt, daß beim Betrieb des Riementriebs (2) zwischen Zahnscheibe (4) und Riemen (12) im Bereich der Verzahnung nur an den Zahnflanken Kontakt zwischen Riemen (12) und Scheibe (4) auftritt, aber ein Kontakt zwischen Riemen-Zahngrund (24) und Scheiben-Zahnkopf (26) bzw. zwischen Riemen-Zahnkopf (28) und Scheiben-Zahngrund (30) vermieden wird.

5. Zahnriementrieb nach einem der vorhergehenden Ansprüche,
**dadurch gekennzeichnet,**
daß die Riemenscheibe (4) in ihren Randbereichen (10a, 10b) leicht konisch gestaltet ist.
